# EUROPÄISCHE PATENTANMELDUNG

(11) **EP 4 850 859 A1**
(43) Veröffentlichungstag der Anmeldung: **09.12.2026**
(21) Anmeldenummer: 26176620.8
(22) Anmeldetag: 05.05.2026
(51) Int. Cl.: B25B 21/00, B23P 19/10, B25B 23/10, B25J 17/02

(54) **MODUL ZUM AUTOMATISIERTEN LÖSEN VON SCHRAUBEN**

(30) Priorität: 02.06.2025 DE 102025121413
(71) Anmelder: Liebherr-Verzahntechnik GmbH, 87437 Kempten (DE)
(72) Erfinder: BODENMILLER, David, 87437 Kempten (DE); HIEMER, Lukas, 87437 Kempten (DE); FLESCHUTZ, David, 87437 Kempten (DE); HÖSSLE, Florian, 87437 Kempten (DE); POLLMANN, Jan, 87437 Kempten (DE)
(74) Vertreter: Lorenz Seidler Gossel Part. mbB

(57) **Zusammenfassung**

Die vorliegende Erfindung umfasst ein Modul zum automatisierten Lösen von Schrauben, insbesondere bei der Demontage einer Batterieeinheit, das Modul umfassend eine Schnittstelle zur Montage des Moduls an einer Handlingeinheit, insbesondere einem Roboter, und einen Schrauber zum Lösen einer Schraube. Dabei ist vorgesehen, dass das Modul eine Findekontur zum mechanischen Finden eines Schraubkopfes und eine Ausgleichseinheit umfasst, welche beim Aufsetzen der Findekontur auf dem Schraubkopf eine Zentrierung der Findekontur auf dem Schraubenkopf erlaubt.

## Beschreibung

Die vorliegende Erfindung betrifft ein Modul zum automatisierten Lösen von Schrauben, insbesondere bei der Demontage einer Batterieeinheit.

Bisher erfolgte die Demontage verschraubter Bauteile wie beispielsweise einer Batterieeinheit, bei welcher der Deckel üblicherweise mit dem Gehäuse verschraubt ist, üblicherweise händisch. Hiermit ist jedoch ein hoher Aufwand verbunden.

Druckschrift DE 10 2023 125 296 A1 zeigt ein Modul zur automatisierten Handhabung von Schrauben, welches ein automatisches Lösen und Entfernen der Schrauben ermöglicht. Hierbei ist ein Untergriffelement mit einer Greifkontur vorgesehen, welche unter den Kopf einer Schraube verfahrbar ist, um diese am Modul zu sichern.

Das automatische Lösen der Schrauben erfordert jedoch ein sehr genaues Heranfahren des Moduls bzw. des Schraubers an die zu lösende Schraube, um den Bit des Schraubers mit der Schraubkontur im Kopf des Schraubers zu koppeln. Ungenauigkeiten beim Heranfahren des Moduls bzw. Schraubers verhindern daher ein erfolgreiches Lösen der Schrauben.

Aufgabe der vorliegenden Erfindung ist es daher, die Prozesssicherheit beim automatisierten Lösen von Schrauben zu erhöhen.

Diese Aufgabe wird durch den Gegenstand der unabhängigen Ansprüche gelöst. Bevorzugte Ausgestaltungen der vorliegenden Erfindung sind Gegenstand der Unteransprüche.

Die vorliegende Erfindung umfasst ein Modul zum automatisierten Lösen von Schrauben, das Modul umfassend: eine Schnittstelle zur Montage des Moduls an einer Handlingeinheit, insbesondere einem Roboter, und einen Schrauber zum Lösen einer Schraube. Dabei ist vorgesehen, dass das Modul eine Findekontur zum mechanischen Finden eines Schraubkopfes und eine Ausgleichseinheit umfasst, welche beim Aufsetzen der Findekontur auf dem Schraubkopf eine Zentrierung der Findekontur auf dem Schraubenkopf erlaubt.

Die erfindungsgemäße Kombination aus Findekontur und Ausgleichseinheit ermöglicht es, die Schraube auch dann prozesssicher herauszuschrauben, wenn das Modul relativ ungenau und damit ggf. einem gewissen Versatz zu der Mittelachse der Schraube zugestellt wird, da sie eine Selbst-Zentrierung des Moduls ermöglicht.

Das erfindungsgemäße Modul kann immer dann, wenn eine oder mehrere Schrauben automatisiert gelöst werden sollen, zum Einsatz kommen. Insbesondere kann die vorliegende Erfindung hierbei beim Recycling zum Einsatz kommen, beispielsweise bei der Demontage einer Batterieeinheit.

Gemäß einer möglichen Ausgestaltung der vorliegenden Erfidung umfasst die Findekontur mindestens eine Anlaufschräge. Kommt diese bei einem außermittigen Heranfahren in Kontakt mit dem Schraubenkopf, wird durch das weitere Heranfahren eine seitliche Ausweichbewegung der Findekontur erzwungen, bei welcher die Schräge auf dem Schraubenkopf gleitet.

Die Findekontur und insbesondere die Anlaufschräge ist hierbei bevorzugt so ausgestaltet, dass sich die Findekontur durch die Ausweichbewegung an dem Schraubenkopf zentriert.

Beispielsweise ist die Findekontur und insbesondere die Anlaufschräge hierbei in einem oder mehreren Abschnitten um eine Drehachse des Schraubers herum angeordnet.

Gemäß einer möglichen Ausgestaltung der vorliegenden Erfindung ist die Findekontur hierbei konusförmig ausgestaltet. Sie kann hierbei beispielsweise die Form eines Innenkonus aufweisen und sich daher gegenüber einer Außenkontur des Schraubenkopfes zentrieren, oder einen Außenkonus, und sich gegenüber einer Innekontur des Schraubkopfes zentrieren, oder beides.

Gemäß einer möglichen Ausgestaltung der vorliegenden Erfindung sind der Schrauber und die Findekontur an einer Konsole angeordnet, welche über die Ausgleichseinheit mit der Schnittstelle in Verbindung steht, so dass bei einem Aufsetzen der Findekontur auf dem Schraubkopf die Konsole eine Ausweichbewegung gegenüber der Schnittstelle ausführen kann.

Durch die beim Aufsetzen der Findekontur auf dem Schraubkopf auf die Findekontur ausgeübte Kraft wird daher nicht nur die Findekontur, sondern die gesamte Konsole, an welcher auch der Schrauber angeordnet ist, ausgelenkt. Hierdurch wird durch das Zentrieren der Findekontur die gesamte Konsole und damit auch der Schrauber gegenüber der Schraube zentriern.

Gemäß einer möglichen Ausgestaltung der vorliegenden Erfindung sind der Schrauber und die Findekontur bevorzugt koaxial zueinander angeordnet, so dass durch ein Zentrieren der Findekontur an einem Schraubenkopf der Schrauber ohne die Notwendigkeit weiterer Verstellbewegungen gegenüber dem Schraubenkopf zentriert wird.

Gemäß einer möglichen Ausgestaltung der vorliegenden Erfindung umfasst das Modul einen Linearaktor, über welchen der Schrauber axial gegenüber der Findekontur verfahren werden kann. Dies erlaubt insbesondere ein Zurückfahren des Schraubers, um mit der Findekontur das Modul zu zentrieren, sowie ein Heranfahren des Schraubers an die Schraube.

Gemäß einer möglichen Ausgestaltung der vorliegenden Erfindung weist die Findekontur eine Öffnung auf, durch welche ein Schrauberbit hindurch in einen Schraubenkopf verfahren werden kann. Hierdurch kann der Schrauberbit auch dann in die Schraubkontur am Schraubenkopf verfahren werden, wenn die Findekontur noch am Schraubenkopf angreift.

Gemäß einer möglichen Ausgestaltung der vorliegenden Erfindung ist die Findekontur beweglich am Modul angeordnet und kann seitlich von dem Schraubenkopf wegbewegt werden, insbesondere durch einen Aktor. Hierdurch kann das Schrauberbit jedenfalls in einen Schraubenkopf verfahren werden, wenn die Findekontur vom Schraubenkopf weg bewegt wurde. Beispielsweise ist die Findekontur hierbei schwenkbar an der Konsole angeordnet und kann daher seitlich von dem Schraubenkopf weg verschwenkt werden, um Platz für den Schrauber und/oder ein Herausschrauben der Schraube zu machen.

Gemäß einer möglichen Ausgestaltung der vorliegenden Erfindung wird die Findekontur durch mindestens zwei Findeelemente gebildet, welche zueinander beweglich am Modul angeordnet sind. Die Findekontur wird daher durch zwei oder mehr Findekonturbereiche gebildet, welche jeweils an einem Findelement angeordnet sind. Insbesondere ist die Findekontur bzw. sind die Findekonturbereiche hierbei an einer Frontseite der Findeelemente angeordnet.

Gemäß einer möglichen Ausgestaltung der vorliegenden Erfindung sind die Findelemente um eine Drehachse des Schraubers herum angeordnet.

Gemäß einer möglichen Ausgestaltung der vorliegenden Erfindung sind die Findelemente durch einen Aktor aufeinander zu und/oder voneinander weg verfahrbar, insbesondere verschwenkbar.

Gemäß einer möglichen Ausgestaltung der vorliegenden Erfindung weist das Modul einen Greifer mit mindestens einem Untergriffelement auf, wobei eine Greifkontur des Untergriffelements unter den Kopf einer Schraube verfahrbar ist, um diese am Modul zu sichern.

Gemäß einer möglichen Ausgestaltung der vorliegenden Erfindung sind mindestens zwei Untergriffelemente vorgesehen sind, welche um eine Drehachse des Schraubers herum angeordnet sind und/oder durch einen Aktor aufeinander zu und/oder voneinander weg verfahrbar, insbesondere verschwenkbar sind.

Gemäß einer möglichen Ausgestaltung der vorliegenden Erfindung ist die Findekontur an dem Greifer, insbesondere an einer Frontseite des mindestens einen Untergriffelements, angeordnet.

Insbesondere sind daher die oben beschriebenen Findeelemente durch die Untergriffelemente des Greifers gebildet.

Gemäß einer möglichen Ausgestaltung der vorliegenden Erfindung weist die Ausgleichseinheit mindestens zwei Linearachsen auf, welche bevorzugt eine Ebene aufspannen, welche senkrecht zur Drehachse des Schraubers verläuft.

Durch den Einsatz von Linearachsen für die Ausgleichseinheit wird sichergestellt, dass die Ausweichbewegung nicht zu einer veränderten Ausrichtung der Drehachse des Schraubers führt, sondern lediglich zu einer seitlichen Verschiebung, so dass die Drehachse des Schraubers parallel zur Drehachse der Schraube ausgerichtet bleibt.

Gemäß einer möglichen Ausgestaltung der vorliegenden Erfindung weist die Ausgleichseinheit und/oder das Modul eine dritte Linearachse auf, welche parallel zur Drehachse des Schraubers verläuft.

Weist die Ausgleichseinheit die dritte Linearachse auf, kann die Handlingeinheit zum Heranfahren der Findekontur an den Schraubenkopf eingesetzt werden, und die Ausgleichseinheit gleicht etwaige Ungenauigkeiten bei der Zustellung auch in Richtung der Drehachse des Schraubers aus.

Weist das Modul die dritte Linearachse auf, so umfasst diese bevorzugt einen Aktor, über welchen die Konsole mit der Findekontur und dem Schrauber in einer Richtung parallel zur Drehachse des Schraubers verfahren werden kann. Hierdurch wird die Handlingeinheit nicht für die Zustellung der Findekontur an den Schraubenkopf benötigt.

Gemäß einer möglichen Ausgestaltung können sowohl das Modul als auch die Ausgleichseinheit eine dritte Linearachse umfassen.

Gemäß einer möglichen Ausgestaltung der vorliegenden Erfindung weist die Ausgleichseinheit einen oder mehrere Antriebe, ein Messsystem und eine Steuerung auf.

Gemäß einer möglichen Ausgestaltung der vorliegenden Erfindung ist die Steuerung so ausgestaltet, dass sie den oder die Antriebe für einen Massenausgleich und/oder eine Zentrierung so ansteuert, dass bei einer nicht vertikalen Ausrichtung des Moduls die auf die Ausgleicheinheit wirkende Gewichtskraft ausgeglichen wird und/oder die Ausgleichseinheit zentriert wird.

Insbesondere können hierbei die mindestens zwei Linearachsen, welche bevorzugt eine Ebene aufspannen, welche senkrecht zur Drehachse des Schraubers verläuft, jeweils einen Antrieb aufweisen, welcher durch die Steuerung angesteuert wird. Bei dem Antrieb kann es sich beispielsweise um einen Pneumatikzylinder oder einen elektromechanischen Antrieb handeln.

Gemäß einer möglichen Ausgestaltung der vorliegenden Erfindung ist die Ausgleichseinheit von einen ersten Zustand, in welchem sie fixiert ist und keine Ausgleichsbewegung zulässt, in einen zweiten Zustand, in welchem sie eine Ausgleichsbewegung zulässt, hin und her schaltbar.

Die vorliegenden Erfindung umfasst weiterhin ein System zum automatisierten Lösen von Schrauben, insbesondere bei der Demontage einer Batterieeinheit, mit einer Steuerung, einer Handlingeinheit, insbesondere einem Roboter, und einem Modul, wie es oben beschrieben wurde. Die Steuerung ist hierbei bevorzugt so ausgestaltet, dass sie das System so ansteuert, dass das Modul automatisiert an Schrauben eines Werkstücks herangefahren wird uns diese löst.

Die Steuerung des Systems steuert bevorzugt die Handlingeinheit und das Modul an. Hierbei kann die Steuerung des System mehrere separate Steuerungskomponenten aufweisen, von welchen eine die Handlingeinheit und eine andere das Modul ansteuert, oder eine gemeinsame Steuerungskomponente zur Ansteuerung von Handlingeinheit und Modul.

Gemäß einer möglichen Ausgestaltung der vorliegenden Erfindung umfasst das System weiterhin ein Messgerät zur 3D-Vermessung eines Werkstücks mit einem oder mehreren Schrauben, welche gelöst werden sollen, insbesondere zur 3-D-Vermessung der Batterieeinheit.

Gemäß einer möglichen Ausgestaltung der vorliegenden Erfindung handelt es sich hierbei um ein Messgerät um einen optischen Scanner.

Gemäß einer möglichen Ausgestaltung der vorliegenden Erfindung ist die Steuerung so ausgestaltet, dass sie anhand der durch das Messgerät generierten 3D-Punktewolke die Positionen der Schrauben auf dem Werkstück identifiziert und die Findekontur anhand der so identifizierten Positionen an die eine oder mehreren Schrauben heranfährt.

Gemäß einer möglichen Ausgestaltung der vorliegenden Erfindung ist die Steuerung so ausgestaltet, insbesondere so programmiert ist, dass das System folgende Schritte durchführt:
- Heranfahren der Findekontur an einen Schraubenkopf, wobei durch den Kontakt zwischen Findekontur und Schraubenkopf die Ausgleichseinheit ausgelenkt wird, bis die Findekontur am Schraubenkopf zentriert ist,
- Verfahren des Schraubers zum Einfahren des Schrauberbits in eine Schraubkontur des Schraubenkopfs, und
- Lösen der Schraube durch Betätigen des Schraubers.

Bevorzugt erfolgt hierbei das Heranfahren der Findekontur an einen Schraubenkopf mit gelöster Ausgleichseinheit. Weiter bevorzugt erfolgt ein Fixieren der Ausgleichseinheit, bevor der Schraubers verfahren und/oder die Schraube gelöst wird.

Gemäß einer möglichen Ausgestaltung der vorliegenden Erfindung ist die Steuerung so ausgestaltet, insbesondere so programmiert ist, dass das System nach einem zumindest teilweisen Lösen der Schraube den Schraubkopfgreift und/oder die Schraube aus der Schraubaufnahme am Werkstück entnimmt. Bevorzugt erfolgt dies durch einen Greifer bzw. eine Greifkontur, wie sie oben beschrieben wurden.

Gemäß einer möglichen Ausgestaltung der vorliegenden Erfindung ist die Steuerung so ausgestaltet, insbesondere so programmiert ist, dass das System nach dem Zentrieren der Findekontur die Findekontur vom Schraubkopf in axialer Richtung des Schraubers wegfährt.

Gemäß einer möglichen Ausgestaltung der vorliegenden Erfindung ist die Steuerung so ausgestaltet, insbesondere so programmiert ist, dass das System nach dem Zentrieren der Findekontur und ggf. einem Wegfahren der Findekontur die Findekontur seitlich vom Schraubkopf wegbewegt, insbesondere durch voneinander weg Verfahren von Findeelementen, an welchen die Findekontur angeordnet ist.

Gemäß einer möglichen Ausgestaltung der vorliegenden Erfindung ist die Steuerung so ausgestaltet, insbesondere so programmiert ist, dass die Ausgleichseinheit nach dem Zentrieren der Findekontur aber vor dem Wegfahren und/oder wegbewegen der Findekontur gesperrt wird, d.h. in den fixierten Zustand geschaltet wird.

Gemäß einer möglichen Ausgestaltung der vorliegenden Erfindung ist die Steuerung so ausgestaltet, insbesondere so programmiert ist, dass das System eine Ansteuerung von einem oder mehreren Antrieben der Ausgleichseinheit für einen Massenausgleich und/oder eine Zentrierung vornimmt, so dass bei einer nicht vertikalen Ausrichtung des Moduls die auf die Ausgleicheinheit wirkende Gewichtskraft ausgeglichen wird und/oder die Ausgleichseinheit zentriert wird.

Die vorliegende Erfindung umfasst weiterhin ein Verfahren zum Betrieb eines Moduls und/oder eines Systems, wie es oben beschrieben wurde, mit den Schritten:
- Heranfahren der Findekontur an einen Schraubenkopf, wobei durch den Kontakt zwischen Findekontur und Schraubenkopf die Ausgleichseinheit ausgelenkt wird, bis die Findekontur am Schraubenkopf zentriert ist,
- bevorzugt Fixieren der Ausgleichseinheit,
- Verfahren des Schraubers zum Einfahren des Schrauberbits in eine Schraubkontur des Schraubenkopfs, und
- Lösen der Schraube durch Betätigen des Schraubers.

Bevorzugt werden das Modul und/oder das System hierbei von einer Steuerung so angesteuert, dass sie die oben genannten Schritte durchführen.

Gemäß einer möglichen Ausgestaltung der vorliegenden Erfindung umfasst das Verfahren weiterhin:
- nach einem zumindest teilweisen Lösen der Schraube: Greifen des Schraubkopfes und/oder Entnehmen der Schraube aus der Schraubaufnahme am Werkstück;
   und/oder
- nach dem Zentrieren der Findekontur: Wegfahren der Findekontur vom Schraubkopf in axialer Richtung des Schraubers und/oder seitliches Wegbewegen der Findekontur vom Schraubkopf, insbesondere durch voneinander weg Verfahren von Findeelementen, an welchen die Findekontur angeordnet ist.

Das erfindungsgemäße Verfahren erfolgt bevorzugt so, wie dies bereits oben zum Modul und System beschrieben wurde.

Die vorliegende Erfindung wird nun anhand von Figuren und Ausführungsbeispielen näher beschrieben.

Hierbei zeigen:
- Fig. 1:: Ein erstes Ausführungsbeispiel eines erfindungsgemäßen Moduls, bei welchem ein Innenkonus als Findekontur zum Einsatz kommt.
- Fig. 2:: Zweites Ausführungsbeispiel eines erfindungsgemäßen Moduls, wobei ein Außenkonus als Findekontur zum Einsatz kommt.
- Fig. 3:: Eine schematische Darstellung eines erfindungsgemäßen Systems.
- Fig. 4:: Ein ersten und einen zweiten Schritt eines Ausführungsbeispiels eines erfindungsgemäßen Verfahrens.
- Fig. 5A:: Drei Schritte einer ersten Variante des Ausführungsbeispiels des erfindungsgemäßen Verfahrens,
- Fig. 5B:: Drei Schritte einer zweiten Variante des Ausführungsbeispiels des erfindungsgemäßen Verfahrens und,
- Fig. 6:: Drei Schritte des Ausführungsbeispiels des erfindungsgemäßen Verfahrens.

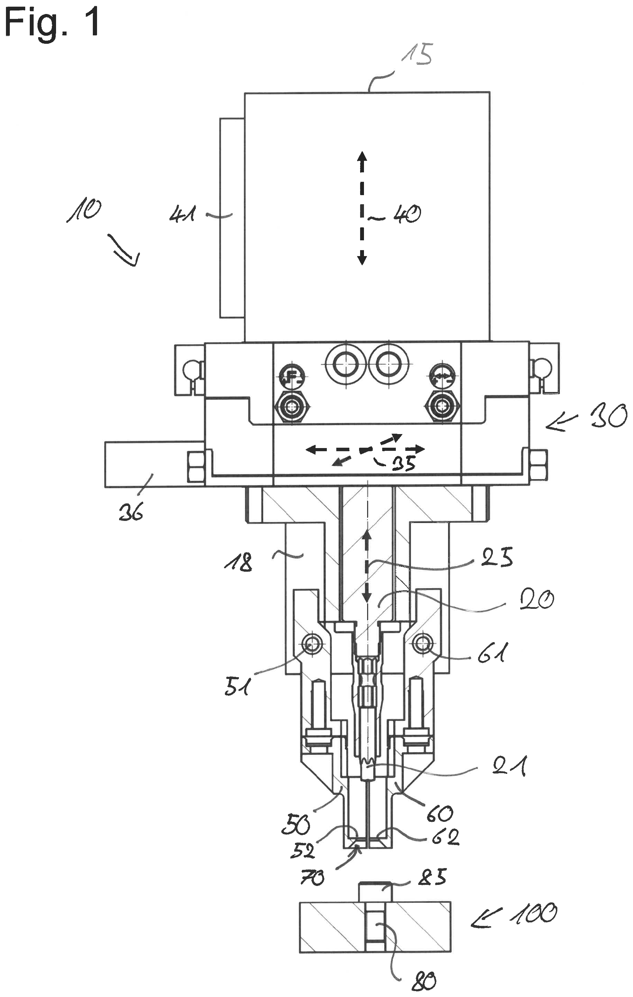

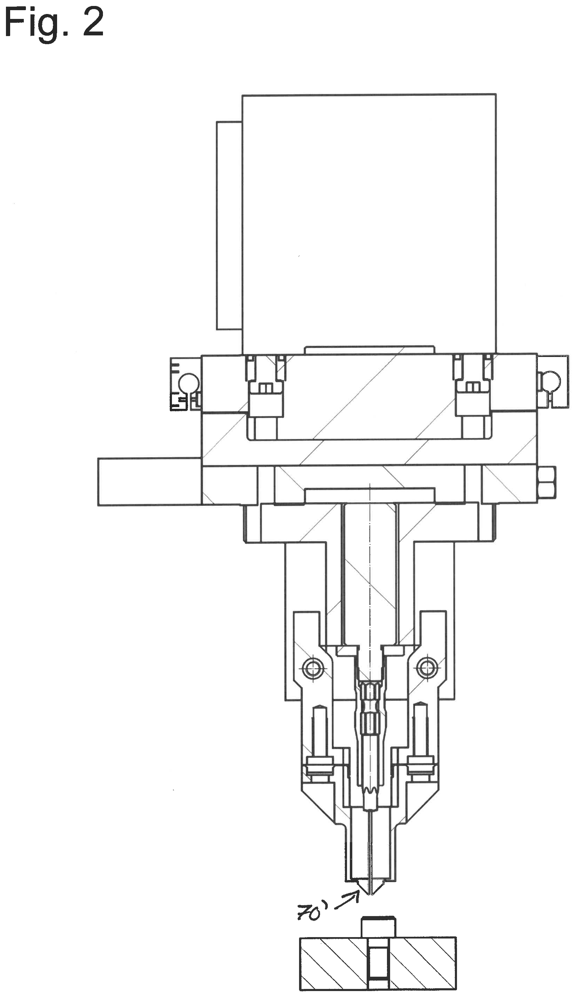

Figuren 1 und 2 zeigen zwei Ausführungsbeispiele eines erfindungsgemäßen Moduls, welche sich lediglich im Hinblick auf die Form der Findekontur unterscheiden, und daher im Folgenden gemeinsam beschrieben werden. Das Modul wird im Folgenden als Schraubmodul bezeichnet.

Das Schraubmodul umfasst hierbei einen Schrauber 20, eine Ausgleichseinheit 30 sowie eine Findekontur 70 bzw. 70'. Des Weiteren ist eine nicht im einzelnen dargestellte Schnittstelle 15 zur Montage des Schraubmoduls an einer Handling-Einheit wie beispielsweise einem Roboterarm, vorgesehen, sodass das Schraubmodul über die Handling-Einheit bewegt werden kann.

Der Schrauber 20 sowie die Findekontur 70 sind hierbei an einer Konsole 18 angeordnet, welche über die Ausgleichseinheit 30 beweglich mit der Schnittstelle 15 in Verbindung steht, sodass mittels der Ausgleichseinheit 30 die Konsole gegenüber der Schnittstelle 15 und damit der Handling-Einheit bewegbar ist.

Im Ausführungsbeispiel ist der Schrauber 20 über einen Linearantrieb 25 entlang seiner Drehachse verfahrbar.

Die Findekontur 70 ist im Ausführungsbeispiel an mindestens zwei Findeelementen 50 und 60 angeordnet, welche beweglich an der Konsole 18 angeordnet sind. Insbesondere können die beiden Findeelemente 50 und 60 hierbei über ein nicht näher dargestellten Antrieb aufeinander zu und voneinander weg bewegt werden. Hierfür sind die Findeelemente 50 und 60 jeweils an einer Schwenkachse 51 und 61 schwenkbar an der Konsole 18 befestigt und können über den Antrieb verschwenkt werden.

Die mindestens zwei Findeelemente 50 und 60 sind um die Drehachse der Schraubers 20 herum angeordnet, wobei im Ausführungsbeispiel zwei Findeelemente 50 und 60 vorgesehen sind, welche sich bezüglich der Drehachse gegenüberliegen.

Die Schwenkachsen 51, 61 liegen hierbei in einer Ebene, welche sich auf der Drehachse des Schraubers liegt, sodass die Findeelemente auf die Achse zu und von der Achse weg geschwenkt werden können.

Im Ausführungsbeispiel bilden die Findeelemente 50, 60 gleichzeitig Greifelemente mit einer Greifkontur 52, 62, durch welche die Schraube 80 unterhalb des Schraubenkopfes 85 gegriffen werden kann. Die Greifkontur 52, 62 bildet daher einen Untergriff bezüglich des Schraubenkopfes 85. Die Finde- bzw. Greifelemente 50, 60 stellen daher Klemmbacken eines Greifers dar.

Die Findekontur 70, 70' ist an der Frontseite, welche in den Figuren nach unten gerichtet ist, der Findeelemente 50, 60 angeordnet, d.h. bezüglich der Richtung der Drehachse des Schraubers vorne an den Findeelementen 50, 60.

Bei denen in Fig. 1 gezeigten ersten Ausführungsbeispielen wird die Findekontur 70 durch einen Innenkonus gebildet, bei den in Fig. 2 gezeigten zweiten Ausführungsbeispiel wird die Findekontur 70' durch einen Außenkonus gebildet, von welchen dementsprechend jeweils eine Hälfte bzw. ein Teilstück auf einem der mindestens zwei Findeelemente 50, 60 angeordnet ist.

Im Ausführungsbeispiel ist die Findekontur so ausgestaltet, dass sie auch im geschlossenen Zustand der Findeelemente 50, 60 eine Öffnung aufweist, durch welche der Schrauber-Bit 21 des Schraubers 20 hindurch in eine Schraubkultur des Schraubenkopfes 85 hineinverfahren werden kann.

Die Ausgleichseinheit 30 weist zwei Linearachsen 35 auf, welche eine Ausweichbewegung der Konsole 18 in einer Ebene, die senkrecht auf der Drehachse des Schraubers 20 steht, erlauben. Im Ausführungsbeispiel ist eine dritte Linearachse 40 vorgesehen, welche eine Ausweichbewegung parallel zur Drehachse des Schraubers 20 erlaubt.

In einer ersten Ausgestaltung des Ausgleichseinheit weisen die Linearachsen jeweils ein Federsystem auf, über welches die Linearachsen in eine Neutral-Stellung vorgespannt sind, und gegen dessen Kraft die Konsole gegenüber der Schnittstelle 15 bewegt werden kann.

Ist nur dieses Federsystem vorgesehen, hat dies allerdings den Nachteil, dass bei einer Schrägstellung des Schraubmoduls die Gewichtkraft der Konsole eine Auslenkbewegung des Ausgleichseinheit nach sich zieht, sodass die Position der Konsole und damit der Drehachse des Schraubers mechanisch nicht mehr eindeutig definiert ist.

Gemäß einer möglichen Ausgestaltung ist daher zumindest ein Messsystem 36, 41 vorgesehen, über welches die Ausgleichsbewegung des Ausgleichseinheit erfasst wird. Mittels des Messsystems kann daher auch die Position des Konsole 18 und damit des Schraubers 20 gegenüber der Schnittstelle 15 bestimmt werden.

In einer möglichen Variante ist die Steuerung des Moduls bzw. Systems so ausgestaltet, dass sie die Position der Konsole 18 gegenüber der Schnittstelle 15 und damit eventuelle durch die Gewichtskraft erzeugte Ausgleichsbewegungen erfasst und bei der Ansteuerung des Handling-Einheit beim Heranfahren der Schraubeinheit an eine Schraube durch eine entsprechende Ansteuerung des Handling-Einheit kompensiert.

In einer bevorzugten Ausgestaltung ist die Ausgleichseinheit 30 jedoch mit einem Antriebssystem ausgerüstet, welches über eine Bewegung entlang der Linearachsen 35 ein Masseausgleich vornimmt. Die Steuerung steuert hierbei das Antriebssystem auf Grundlage der Daten des Messsystems 36 und/oder Daten zur Ausrichtung des Schraubmoduls so an, dass die auf die Ausgleichseinheit wirkenden Gewichtskräfte in der durch die Linearachse 35 definierten Ebene ausgeglichen wird.

Alternativ oder zusätzlich kann die Ausgleichseinheit auch durch eine Lageregelung so angesteuert werden, dass sie durch die Antriebe zentriert wird. Insbesondere kann diese Funktion eingesetzt werden, um die Einheit nach dem Entschraubprozess wieder zu zentrierten.

Die beiden Messsysteme erkennen auch während der Zustellstellbewegung auf dem Schraubenkopf, ob die Ausgleichseinheit bereits ausgelenkt wird. Die Lageregelung wirkt dieser ungewollten Bewegung entgegen. Vor dem Aufsetzen der Klemmbacken auf dem Schraubenkopf wird diese Funktion deaktiviert.

Durch den Massenausgleich können daher auch Schrauben entschraubt werden, die nicht vertikal montiert sind. Weiterhin wird durch die Lageregelung ein unbeabsichtigtes Verlassen des Zentrums während des Finde-Prozesses verhindert.

Die Steuerung ist jedoch so ausgestaltet, dass ein Verlassen des Zentrums durch die Kraft, welche durch den Kontakt zwischen der Findekontur und dem Schraubkopf entsteht, möglich ist.

In einer möglichen Ausgestaltung wird hierfür die Lageregelung, mittels welcher die Ausgleichseinheit im Zentrum gehalten wird, für das Aufsetzen der Findekontur auf den Schraubkopf ausgeschaltet. Der Massenausgleich kann dagegen auch während dieses Prozesses beibehalten werden, sodass durch das Aufsetzen der Findekontur auf dem Schraubkopf nur die Reibungskraft innerhalb der Ausgleichseinheit ausgeglichen werden muss, um die Konsole 18 zu bewegen.

Weiterhin ist die Ausgleichseinheit 30 schaltbar und kann von einem Zustand, in welchem sie eine Ausgleichsbewegung erlaubt, in einen gesperrten Zustand, in welchem keine Ausgleichsbewegung möglich ist und die Achsen der Ausgleichseinheit fixiert sind, vor und zurückgeschaltet werden.

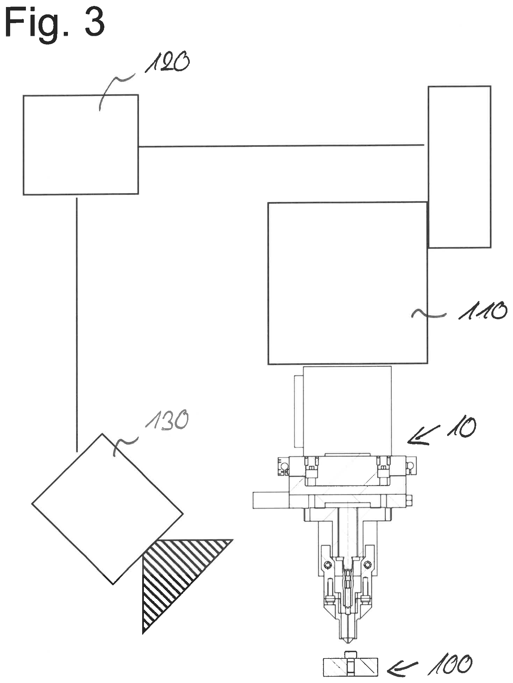

Figur 3 zeigt im Ausführungsbeispiel eines Systems, in welchem das erfindungsgemäße Schraubmodul 10 zum Einsatz kommen kann. Hierbei ist schematisch die Handling-Einheit 110 dargestellt, an welcher das Schraubmodul 10 angeordnet ist. Die Handling-Einheit 110 weist bevorzugt eine Mehrzahl von motorisch angetriebenen Achsen auf, über welche das Schraubmodul 10 im Raum bewegt werden kann.

Bei der Handling-Einheit handelt es sich beispielsweise um einen Roboter, bspw. um einen Industrieroboter, mit mehreren rotatorischen Achsen, bspw. mit mindestens 6 rotatorischen Achsen handeln. Je nach Schraub-Aufgabe ist jedoch auch der Einsatz eines Flächenportals denkbar.

Weiterhin ist eine Steuerung 120 vorgesehen, welche über Steuerleitungen mit der Handling-Einheit 110 und dem Schraubmodul 10 in Steuerungsverbindung steht.

Weiterhin kann das System 120 ein 3D-Messgerät 130 umfassen. Dieses kann insbesondere zur optischen 3D-Vermessung des Werkstücks 100, aus welchen die eine oder mehrere Schrauben 80 entfernt werden sollen, eingesetzt werden.

Im Ausführungsbeispiel wird die Position der Schraube 80 auf dem Werkstück 100 hierbei anhand der durch das 3D-Messgerät ermittelten Punkte-Wolke bestimmt.

Diese Positionsbestimmung ist auf Grund der durch die Findekontur zur Verfügung gestellten Funktionalität ausreichend genau, um die Handling-Einheit 110 anzusteuern. Hierdurch kann auf eine Kameraerfassung der Schrauben zur Ansteuerung der Handling-Einheit verzichtet werden.

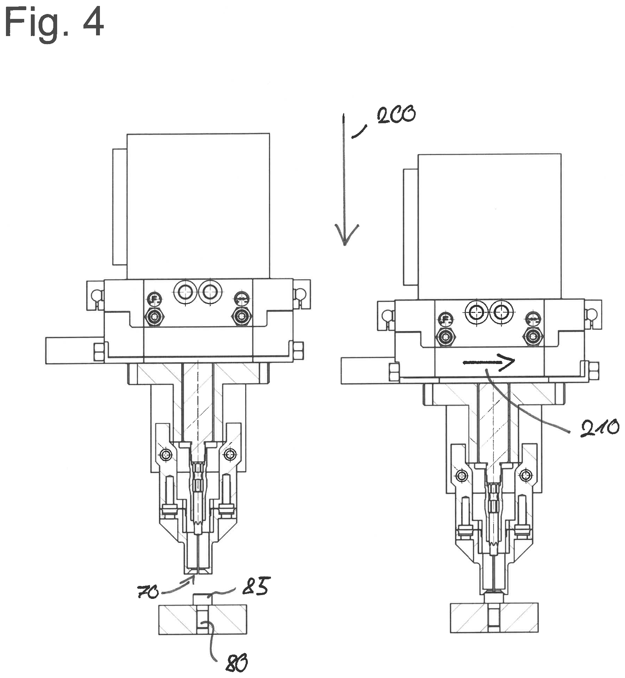

Das erfindungsgemäße Verfahren wird nun anhand von Fig. 4 bis 6 näher beschrieben.

In Fig. 4 ist anhand von zwei Zeichnungen dargestellt, wie die erfindungsgemäße Findekontur eingesetzt wird, um die Schraubeinheit gegenüber der Schraube 80 zu zentrieren.

In Fig. 4 ist links die Ausgangssituation dargestellt. Hierbei sind die Findeelemente geschlossen, sodass sich die an diesen angeordnete Teile der Findekontur zu der für die mechanische Findefunktion gewünschten Findekontur zusammen fügen. Die Ausgleichseinheit ist in allen drei Raumrichtungen gelöst, und der Schrauber ist zurückgefahren.

Das Schraubmodul wird nun in eine Position vor dem Schraubkopf 85 verfahren. Dies erfolgt wie oben beschreiben bevorzugt auf Grundlage einer Erfassung der Position (und ggf. Ausrichtung) der Schraube 80, welche anhand von 3D-Messdaten ermittelt wurde. Die Schraubeinheit ist hierbei so ausgerichtet, dass die Drehachse des Schraubers parallel zur Drehachse der Schraube 80 ausgerichtet ist.

Wie in Fig. 4 links dargestellt, ist es jedoch möglich, dass aufgrund von Messungenauigkeiten oder Ungenauigkeiten der Handling-Einheit die Rotationsachse des Schraubers nicht mit der Rotationsachse der Schraube 80 fluchtet, sondern ein gewisser Versatz zwischen der Schraubeinheit und der Schraube besteht.

Die Schraubeinheit kann nun dennoch mittels der Handling-Einheit in Richtung der Drehachse des Schraubers auf die Schraube zu verfahren werden. Dies wird durch Pfeil 200 symbolisiert. In einer alternativen Ausgestaltung könnte diese Linearbewegung auch durch eine zusätzliche Linearachse, welche zwischen der Ausgleichseinheit und des Schnittstelle 15 oder Ausgleichseinheit und der Konsole vorgesehen ist, vorgenommen werden.

Kommt nun die Findekontur 70 mit dem Schraubkopf 85 außermittig in Kontakt, gleitet die schräge Anlauffläche der Findekontur 70 an einer Kante des Schraubkopfes 85 entlang und erzeugt hierdurch eine in einer Ebene senkrecht zur Drehachse des Schraubers wirkende Kraft, welche über die Findeelemente auf die Konsole 18 wirkt und die Konsole 18 daher unter Auslenkung der Ausgleichseinheit seitlich verschiebt. Dies ist durch Pfeil 210 dargestellt.

Während der Axialbewegung des Moduls, mit welchem die Findekontur axial auf den Schraubenkopf verfahren wird, erfasst die Findekontur den Schraubenkopf daher taktil und zentriert sich gegenüber diesem.

Die Findekontur 70 zentriert daher die gesamte Konsole 18 und damit den Schrauber 20 gegenüber dem Schraubkopf 85, sodass die Drehachse des Schraubers und die Drehachse der Schraube miteinander fluchten, sobald die Findekontur gegenüber dem Schraubenkopf zentriert wurde.

Bei der in Fig. 1 und 4 gezeigten ersten Ausführungsform der vorliegenden Erfindung ist die Findekontur hierbei außenzentriert, d. h. die Schrägen der Findekontur stützen sich auf den Außenkanten des Schraubkopfes ab.

Bei der in Fig. 2 gezeigten zweiten Ausführungsform ist die Findekontur dagegen innenzentriert, d. h. die Schrägen der Findekontur stützen sich an Innenflächen der Schraubkontur des Schraubkopfes ab.

Nach der in Fig. 4 rechts dargestellten Zentrierung des Schraubmoduls gegenüber dem Schraubenkopf wird die Ausgleichseinheit in allen drei Raumrichtungen gesperrt, so dass sie ihre aktuelle Position beibehält.

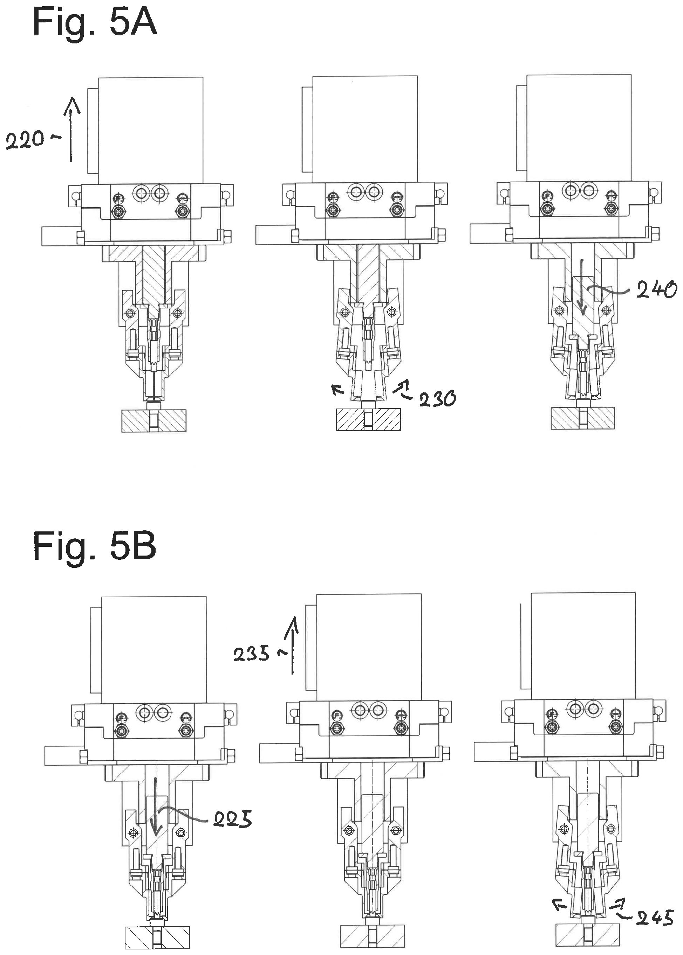

Für die nächsten Schritte des erfindungsgemäßen Verfahrens sind in Fig. 5 A und 5 B zwei unterschiedliche Varianten dargestellt.

Gemäß der in Fig. 5 A dargestellten ersten Variante wird in einem ersten Schritt das Schraubmodul axial über die Bewegung 220 zurückverfahren, sodass die Findekontur nicht mehr unmittelbar auf dem Schraubkopf aufliegt. Die Findekontur wird hierdurch freigefahren, um die Findeelemente auseinander fahren zu können.

Dies ist in Fig. 4 in der Mitte dargestellt. Die Findeelemente werden auseinander gefahren, was als Bewegung 230 dargestellt ist. Hierdurch öffnet sich die Findekontur und gibt den Weg für den Schrauber-Bit frei.

Wie in Fig. 5 A rechts dargestellt wird daraufhin der Schrauber mittels der Linearachse 25 durch die geöffnete Findekontur hindurch auf den Schraubenkopf zugestellt, sodass der Schrauber-Bit 21 in die Schraubkontur des Schraubenkopfes 85 eingreift. Dies ist als Bewegung 240 dargestellt.

Bei der in Fig. 5 B dargestellten Ausführungsvariante wird dagegen noch mit geschlossener Findekontur im ersten Schritt die Schraubeinheit axial auf den Schraubenkopf zugestellt, was als Bewegung 225 dargestellt ist. Hierfür muss die Findekontur so ausgestaltet sein, dass sie auch in geschlossener Stellung eine Öffnung aufweist, durch welche hindurch der Schrauber-Bit verfahren werden kann, um in den Schraubenkopf 85 einzugreifen.

Daraufhin wird in einem zweiten Schritt, welcher in Fig. 5 B in der Mitte dargestellt ist, die Schraubeinheit axial vom Schraubkopf zurückverfahren, um die Findekontur vom Schraubenkopf frei zu fahren. Je nach benötigtem Fahrweg für die VerfahrBewegung 235 kann diese durch eine zusätzliche Vorwärtsbewegung des Schraubers entlang der Achse 25 für den Schrauben-Bit ausgeglichen werden, oder das Spiel des Schrauben-Bits innerhalb des Schraubenkopfes in axialer Richtung wird genutzt.

Bei dem in Fig. 5 B rechts dargestellten dritten Schritt werden nunmehr die Findeelemente über die Bewegung 245 auseinander gefahren und damit die Findekontur geöffnet.

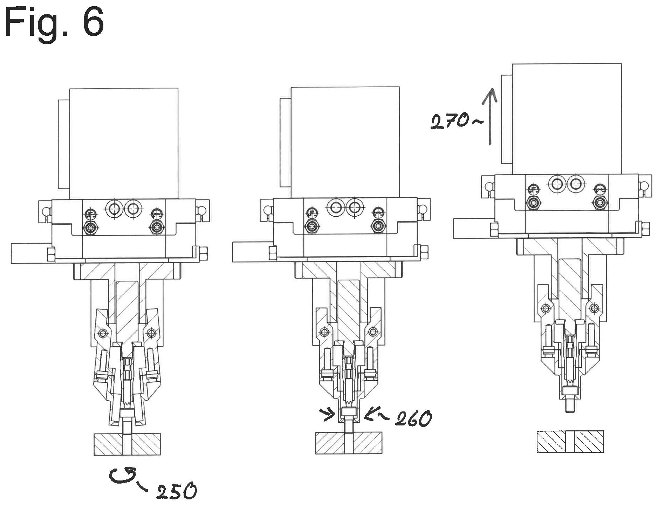

In Fig. 6 sind nunmehr die weiteren Schritte des Verfahrens gezeigt, welche für beide Varianten wiederrum identisch sind.

Wie in Fig. 6 links dargestellt, wird der Schrauber-Bit 21 durch den Drehantrieb des Schraubers 20 in Rotation versetzt, was als Rotationsbewegung 250 eingezeichnet ist. Hierdurch wird die Schraube mindestens teilweise aus ihrer Schraubaufnahme heraus geschraubt.

Wie in Fig. 6 in der Mitte dargestellt, werden daraufhin die Findeelemente aufeinander zu bewegt und die an diesen angeordnete Greifkontur untergreift den Schraubenkopf. Die entsprechende Schließbewegung der Findeelemente ist mit 260 bezeichnet. Hierdurch wird die Schraube am Schraubmodul gesichert.

Wurde die Schraube noch nicht komplett herausgeschraubt, kann dies nun durch eine weitere Betätigung des Schraubers erfolgen.

Ist die Schraube komplett gelöst, wird diese nun wie in Fig. 6 rechts dargestellt durch ein Verfahren der Schraubeinheit mittels der Handling-Einheit entfernt. Die entsprechende Bewegung ist als 270 eingezeichnet.

Die Steuerung ist hierbei so ausgestaltet, dass die Schritte des erfindungsgemäßen Verfahrens automatisiert durchgeführt werden.

Die vorliegende Erfindung erlaubt daher das automatisierte Herausschrauben und Entfernen von Schrauben.

Ein mögliches Einsatzgebiet ist hierbei das Recyceln von Batteriemodulen, bei welchem beispielsweise Schrauben, mit welchen der Deckel des Batteriemoduls am Gehäuse befestigt ist, gelöst und entfernt werden können. Die vorliegende Erfindung ist jedoch auch für jeden anderen Einsatz, bei welchem Schrauben gelöst werden müssen, einsetzbar.

Wie bereits oben beschrieben erlauben die optional in der Ausgleichseinheit 30 vorgesehenen Antriebe, die Ausgleichseinheit auch in einer Position, in welcher die Schraube nicht vertikal ausgerichtet ist, einzusetzen, ohne dass hierfür in die Ansteuerung der Handling-Einheit eingegriffen werden müsste.

Das Messsystem 36 bzw. 41 kann weiterhin dazu eingesetzt werden, um zu überprüfen, ob die Schraube tatsächlich korrekt angefahren wurde. Insbesondere wird hierbei die Auslenkung der Ausgleichseinheit, sobald die Schraubeinheit in ihre Endposition verfahren wurde, überprüft.

Beispielsweise kann die Endposition der Konsole 18 in Axialrichtung des Schraubers und damit die Auslenkung entlang der Achse 40 zur Überprüfung herangezogen werden, ob die Findekontur tatsächlich auf dem Schraubenkopf aufgesetzt wurde, oder auf eine neben dem Schraubenkopf angeordneten Oberfläche. Denn wird eine Außenzentrierung eingesetzt, liegt die den Schraubenkopf umgebende Oberfläche üblicherweise tiefer als die Oberfläche des Schraubenkopfes. Wird eine Innenzentrierung eingesetzt, liegt die den Schraubenkopf umgebende Oberfläche üblicherweise höher liegt als die Schraubkontur des Schraubenkopfes, in welche die Findekontur hinein fahren soll. Die Auslenkung entlang der Achse 40 kann daher durch die Steuerung mit einem Sollwert und/oder einem Grenzwert verglichen werden, um zu ermitteln, ob die Findekontur tatsächlich auf dem Schraubenkopf aufgesetzt wurde.

Weiterhin kann die Ausweichbewegung in der Ebene senkrecht zur Drehachse des Schraubers ebenfalls eingesetzt werden, um zu ermitteln, ob die Findekontur tatsächlich auf den Schraubkopf aufgesetzt wurde. Überschreitet die Ausgleichsbewegung hierbei einen Grenzwert, kann darauf geschlossen werden, dass sich diese nicht auf den Schraubenkopf zentriert hat, sondern vom Schraubenkopf abgerutscht ist.

Wird durch die Steuerung festgestellt, dass die Findekontur nicht auf dem Schraubenkopf aufgesetzt wurde, wird das Schraubmodul bevorzugt noch einmal in eine Ausgangsposition zurückverfahren und es wird ein neuer Versuch für das Aufsetzen gestartet. Weiterhin kann nach einem oder mehreren Versuchen eine Anzeige ausgegeben werden, welche einer Bedienperson anzeigt, dass die Schraube nicht ausgeschraubt werden konnte

Weiterhin kann auch eine Drehmomentüberwachung des Schraubers eingesetzt werden, um zu überprüfen, ob tatsächlich eine Schraube getroffen wurde. Die Drehmomentüberwachung ermöglicht daher eine weitere Überprüfungsinstanz. Wird hierbei festgestellt, dass der Schrauber kein Drehmoment aufbaut, zeigt dies, dass der Schraubkopf nicht getroffen wurde.

Auch in diesem Fall kann noch einmal versucht werden, das Schraubmodul neu aufzusetzen oder es kann eine Anzeige ausgegeben werden, welche einer Bedienperson anzeigt, dass die Schraube nicht ausgeschraubt werden konnte.

Bei den oben beschriebenen Ausführungsbeispielen ist die Findekontur an der Vorderseite der Findeelemente angeordnet, welche gleichzeitig Greifelemente für den Schraubenkopf bilden.

Insbesondere bilden die Findeelemente hierbei Klemmbacken, welche um die Achse des Schrauber-Bits angeordnet sind und welche eine Untergriff-Kontur aufweisen, welche unter den Schraubenkopf gefahren werden kann, um diesen nach dem Herausschrauben sicher zu halten und die Schraube aus der Verschraubung zu entfernen.

In einer alternativen Ausgestaltung könnte die Findekontur jedoch auch an einem separaten Element vorgesehen sein, welches vor den Schrauber-Bit gefahren wird. In einer solchen Ausgestaltung könnten daher beispielsweise sowohl Findeelemente als auch Greifelemente vorgesehen sein, sodass die Findefunktion die Greiffunktion durch separate mechanische Elemente bereitgestellt werden.

Alternativ könnte auch auf die Greiffunktion verzichtet werden, und Findeelemente eingesetzt werden, welche lediglich eine Findekontur tragen, ohne eine Greiffunktion aufweisen.

Die im Ausführungsbeispiel gezeigte Ausgestaltung, bei welcher die Findekontur an der Vorderseite der Klemmbacken vorgesehen ist, verringert jedoch den mechanischen Aufwand.

Im Ausführungsbeispiel sind zwei Findeelemente bzw. zwei Greifelemente vorgesehen. Es könnten jedoch auch drei, vier oder mehr Findeelemente bzw. Greifelemente vorgesehen sein. Weiterhin wäre es ebenfalls denkbar, nur ein Findeelement bzw. Greifelement, welches einseitig unter den Schraubkopf gefahren wird, einzusetzen. In diesem Fall weist bevorzugt die Findekontur eine Innen- und einen Außenzentrierung auf.

Eine Kombinierung von Innen- und Außenzentrierung ist jedoch auch bei der Ausgestaltung mit zwei oder mehr Findeelementen möglich.

Wie oben beschrieben kommt beim Heranfahren des Schraubmoduls an den Schraubenkopf bei einem ungenauen Zustellen des Schraubmoduls eine der Schrägen der Findekontur mit dem Schraubkopf in Berührung, wodurch ein weiteres Zustellen zu einer entsprechenden Ausweichbewegung der Konsole führt, bis das Schraubmodul zum Schraubenkopf zentriert ausgerichtet ist. Durch die mechanische Findefunktion der Findekontur ist daher auch ein ungenaues Heranfahren des Schraubmoduls an den Schraubenkopf möglich.

In einem möglichen Ausgestaltung erlaubt dies, auf eine Kameraerfassung der Schrauben beim Heranfahren des Schraubmoduls an die Schraube zu verzichten, und die Handling-Einheit allein auf Grundlage von 3D-Daten, welche bspw. im Rahmen einer Erfassung des Werkstücks gewonnen werden, anzusteuern.

Die Erfinder haben hierbei herausgefunden, dass das Kamera-basierte Erfassen der Schraubköpfe oftmals nicht zu zufriedenstellenden Resultaten führt, insbesondere wenn die Werkstücke wie beispielsweise die zu recycelnden Batteriemodule, verschmutzt oder die Schraubköpfe durch Rost oder Abrieb beschädigt oder durch Ablagerung schwer erkennbar sind.

Die vorliegende Erfindung erlaubt auch bei solchen Werkstücken ein prozesssicheres Lösen und Entfernen der Schrauben.

## Patentansprüche

1. Modul zum automatisierten Lösen von Schrauben, insbesondere bei der Demontage einer Batterieeinheit, das Modul umfassend:
- eine Schnittstelle zur Montage des Moduls an einer Handlingeinheit, insbesondere einem Roboter, und
- einen Schrauber zum Lösen einer Schraube,
**dadurch gekennzeichnet,**
**dass** das Modul eine Findekontur zum mechanischen Finden eines Schraubkopfes und eine Ausgleichseinheit umfasst, welche beim Aufsetzen der Findekontur auf dem Schraubkopf eine Zentrierung der Findekontur auf dem Schraubenkopf erlaubt.

2. Modul nach Anspruch 1, wobei der Schrauber und die Findekontur an einer Konsole angeordnet sind, welche über die Ausgleichseinheit mit der Schnittstelle in Verbindung steht, so dass bei einem Aufsetzen der Findekontur auf dem Schraubkopf die Konsole eine Ausweichbewegung gegenüber der Schnittstelle ausführen kann, wobei bevorzugt der Schrauber und die Findekontur koaxial zueinander angeordnet sind, so dass durch ein Zentrieren der Findekontur an einem Schraubenkopf auch der Schrauber gegenüber dem Schraubenkopf zentriert wird.

3. Modul nach einem der vorangegangenen Ansprüche, mit einem Linearaktor, über welchen der Schrauber axial gegenüber der Findekontur verfahren werden kann, wobei die Findekontur bevorzugt eine Öffnung aufweist, durch welche ein Schrauberbit hindurch in einen Schraubenkopf verfahren werden kann, und/oder wobei die Findekontur bevorzugt beweglich am Modul angeordnet ist und seitlich von dem Schraubenkopf wegbewegt werden kann, insbesondere durch einen Aktor.

4. Modul nach einem der vorangegangenen Ansprüche, wobei die Findekontur durch mindestens zwei Findeelemente gebildet wird, welche zueinander beweglich am Modul angeordnet sind, wobei die Findelemente bevorzugt um eine Drehachse des Schraubers herum angeordnet sind und/oder durch einen Aktor aufeinander zu und/oder voneinander weg verfahrbar, insbesondere verschwenkbar sind.

5. Modul nach einem der vorangegangenen Ansprüche, wobei das Modul einen Greifer mit mindestens einem Untergriffelement aufweist, wobei eine Greifkontur des Untergriffelements unter den Kopf einer Schraube verfahrbar ist, um diese am Modul zu sichern, wobei bevorzugt mindestens zwei Untergriffelemente vorgesehen sind, welche um eine Drehachse des Schraubers herum angeordnet sind und/oder durch einen Aktor aufeinander zu und/oder voneinander weg verfahrbar, insbesondere verschwenkbar sind,
wobei bevorzugt die Findekontur an dem Greifer, insbesondere an einer Frontseite des mindestens einen Untergriffelements, angeordnet ist, wobei die Findeelemente gemäß Anspruch 4 bevorzugt durch die Untergriffelemente des Greifers gebildet werden.

6. Modul nach einem der vorangegangenen Ansprüche, wobei die Ausgleichseinheit mindestens zwei Linearachsen aufweist, welche bevorzugt eine Ebene aufspannen, welche senkrecht zur Drehachse des Schraubers verläuft, und/oder wobei die Ausgleichseinheit und/oder das Modul eine dritte Linearachse aufweist, welche parallel zur Drehachse des Schraubers verläuft.

7. Modul nach einem der vorangegangenen Ansprüche, wobei die Ausgleichseinheit einen oder mehrere Antriebe, ein Messsystem und eine Steuerung aufweist, wobei bevorzugt die Steuerung den oder die Antriebe für einen Massenausgleich und/oder eine Zentrierung so ansteuert, dass bei einer nicht vertikalen Ausrichtung des Moduls die auf die Ausgleicheinheit wirkende Gewichtskraft ausgeglichen wird und/oder die Ausgleichseinheit zentriert wird.

8. Modul nach einem der vorangegangenen Ansprüche, wobei die Ausgleichseinheit von einen ersten Zustand, in welchem sie fixiert ist und keine Ausgleichsbewegung zulässt, in einen zweiten Zustand, in welchem sie eine Ausgleichsbewegung zulässt, hin und her schaltbar ist.

9. System zum automatisierten Lösen von Schrauben, insbesondere bei der Demontage einer Batterieeinheit, mit einer Steuerung, einer Handlingeinheit, insbesondere einem Roboter, und einem Modul nach einem der vorangegangenen Ansprüche.

10. System nach Anspruch 9 mit einem Messgerät zur 3D-Vermessung eines Werkstücks mit einem oder mehreren Schrauben, welche gelöst werden sollen, insbesondere zur 3-D-Vermessung der Batterieeinheit und/oder insbesondere mit einem optischen Scanner, wobei die Steuerung anhand der durch das Messgerät generierten 3D-Punktewolke die Positionen der Schrauben auf dem Werkstück identifiziert und die Findekontur anhand der so identifizierten Positionen an die eine oder mehreren Schrauben heranfährt.

11. System nach Anspruch 9 oder 10, wobei die Steuerung so ausgestaltet, insbesondere so programmiert ist, dass das System folgende Schritte durchführt:
- Heranfahren der Findekontur an einen Schraubenkopf, wobei durch den Kontakt zwischen Findekontur und Schraubenkopf die Ausgleichseinheit ausgelenkt wird, bis die Findekontur am Schraubenkopf zentriert ist,
- bevorzugt Fixieren der Ausgleichseinheit,
- Verfahren des Schraubers zum Einfahren des Schrauberbits in eine Schraubkontur des Schraubenkopfs, und
- Lösen der Schraube durch Betätigen des Schraubers.

12. System nach Anspruch 11, wobei die Steuerung so ausgestaltet, insbesondere so programmiert ist, dass das System mindestens einen der folgenden Schritte durchführt:
- nach einem zumindest teilweisen Lösen der Schraube: Greifen des Schraubkopfes und/oder Entnehmen der Schraube aus der Schraubaufnahme am Werkstück;
- nach dem Zentrieren der Findekontur: Wegfahren der Findekontur vom Schraubkopf in axialer Richtung des Schraubers und/oder seitliches Wegbewegen der Findekontur vom Schraubkopf, insbesondere durch voneinander weg Verfahren von Findeelementen, an welchen die Findekontur angeordnet ist.

13. System nach Anspruch 11, wobei die Steuerung so ausgestaltet, insbesondere so programmiert ist, dass das System mindestens einen der folgenden Schritte durchführt:
- Ansteuerung von einem oder mehreren Antrieben der Ausgleichseinheit für einen Massenausgleich und/oder eine Zentrierung, so dass bei einer nicht vertikalen Ausrichtung des Moduls die auf die Ausgleicheinheit wirkende Gewichtskraft ausgeglichen wird und/oder die Ausgleichseinheit zentriert wird.

14. Verfahren zum Betrieb eines Moduls nach einem der Ansprüche 1 bis 9 und/oder eines Systems nach einem der Ansprüche 10 bis 13, mit den Schritten:
- Heranfahren der Findekontur an einen Schraubenkopf, wobei durch den Kontakt zwischen Findekontur und Schraubenkopf die Ausgleichseinheit ausgelenkt wird, bis die Findekontur am Schraubenkopf zentriert ist,
- bevorzugt Fixieren der Ausgleichseinheit,
- Verfahren des Schraubers zum Einfahren des Schrauberbits in eine Schraubkontur des Schraubenkopfs, und
- Lösen der Schraube durch Betätigen des Schraubers.

15. Verfahren nach Anspruch 14, welches weiterhin umfasst:
- nach einem zumindest teilweisen Lösen der Schraube: Greifen des Schraubkopfes und/oder Entnehmen der Schraube aus der Schraubaufnahme am Werkstück; und/oder
- nach dem Zentrieren der Findekontur: Wegfahren der Findekontur vom Schraubkopf in axialer Richtung des Schraubers und/oder seitliches Wegbewegen der Findekontur vom Schraubkopf, insbesondere durch voneinander weg Verfahren von Findeelementen, an welchen die Findekontur angeordnet ist.
